# EUROPEAN PATENT APPLICATION

(11) **EP 1 674 432 A1**
(43) Date of publication of application: **28.06.2006**
(21) Application number: 04788147.9
(22) Date of filing: 17.09.2004
(51) Int. Cl.: C03C 27/06, C09K 3/10, E06B 3/66

(54) **SEALING MATERIAL FOR DOUBLE-GLAZING PANE COMPRISING RESIN COMPOSITION WITH EXCELLENT GAS-BARRIER PROPERTY AND HOT-MELT TACKINESS**

(30) Priority: 02.10.2003 JP 2003344179
(71) Applicant: KANEKA CORPORATION, Osaka-shi, Osaka 530-8288 (JP)
(72) Inventor: NAKASHIMA, Tohru, 5660072 (JP); AOYAMA, Taizo, 6760025 (JP)
(74) Representative: Vossius & Partner
(86) International application number: PCT/JP2004/014043
(87) International publication number: WO 2005/033035

(57) **Abstract**

A sealing material for insulating glass eliminating problem necessity of long-time aging after production is provided and a resin composition having high long-term adhesion strength, high shape retention, and high gas-barrier property and especially having excellent hot-melt adhesive property is also provided. The sealing material for insulating glass including a resin composition having hot-melt adhesive property contains an isobutylene-based diblock copolymer (A) composed of a polymer block (a) containing an aromatic vinyl compound as a constituent monomer and a polymer block (b) containing isobutylene as a constituent monomer.

## Description

### Technical Field

The present invention relates to a sealing material for insulating glass composed of a novel resin composition with excellent gas-barrier, and in particular, excellent hot-melt adhesive properties.

### Background Art

In recent years, insulating glass attract a great deal of interest in view of energy saving and the demand for such insulating glass has been increasing. Since the production thereof requires many steps, the cost of insulating glass is higher than that of normal glass plates and further reduction in cost is desired. Most of the current insulating glass are formed by facing at least two glass plates with an aluminum spacer disposed there to forma hollow layer between the glass plates. Thehollow layer is shielded from the outside air by interposing a primary sealing material between the glass plates and the aluminum spacer, and a space (recess) formed by the inner faces of the peripheries of the facing glass plates and the outer circumferential surface of the spacer is sealed with a room-temperature setting secondary sealing material represented by a polysulfide-based or silicone-based sealing material.

Hitherto, in the production process of insulating glass, various improvements of productivity by simplification or automat ion and the reduction in cost have been studied and proposed. For example, a method using a spacer composed of a resin composition containing a desiccant instead of the aluminum spacer has been proposed. However, in the case of insulating glass including such a room temperature curing sealing material, regardless of the type of the spacer used, long-time aging is required for curing the sealing material after the production of insulating glass. Therefore, disadvantageously, the product cannot be shipped until the curing is completed.

On the other hand, from the standpoint of the reduction in cost of insulating glass, a method for producing insulating glass using a resin composition containing a desiccant as a spacer without using a secondary sealing material has been proposed (Japanese Examined Patent Application Publication No. 61-20501). However, the resin composition for the spacer has insufficient hardness as the spacer, and in reality, it has been difficult to maintain the shape as insulating glass using only the spacer composed of the resin composition.

Also, in a known insulating glass, a material prepared by compounding a desiccant with a hard resin that can be processed by extrusion, for example, a thermoplastic resin such as polyvinyl chloride or hot-melt butyl, the material having a JIS-A hardness of 95, is used as a spacer (Japanese Unexamined Patent Application Publication No. 7-17748). However, when the material having a JIS-A hardness of 95 is used as the spacer or the sealing material for insulating glass, a high stress is applied to the sealed parts or the glass plates of insulating glass, resulting in problems of separation of the sealed parts, clack of the glass of insulating glass itself, and the like.

As a method for preventing the clack of insulating glass, a method for producing insulating glass using a resin composed of a crystalline polyolefin and a butyl-based rubber as a spacer without using a secondary sealing material has been proposed (Japanese Unexamined Patent Application Publication No. 10-114552). However, in this composition, since a butyl rubber having a cold-flow property is used as a principal component, the composition has a problem in view of long-term durability in some applications, resulting in the separation or the deformation of the sealed parts.

A method using a triblock copolymer including a block containing an isobutylene unit and a block containing an aromatic vinyl compound unit as an elastic sealing material for insulating glass has been proposed (PCT Publication No. WO01/010969) . Since this triblock copolymer has a high gas-barrier property and does not have a cold-flow property, the deformation of the sealing material, which is observed in the above composition primarily composed of a butyl rubber, can be prevented. However, since the sealing material has a high melt viscosity in a temperature range in which the sealing material is applicated to a glass plate by hot-melting, sufficient adhesion strength cannot be provided. Therefore, the sealing material has a problem of long-term durability, resulting in the separation of the sealed parts.

### Disclosure of Invention

Accordingly, under the present situation, there is not known insulating glass that does not include a secondary sealing material but includes only a spacer required for insulating glass and that satisfies all properties such as the durability, the shape retention property, and the processability. An object of the present invention is to provide a sealing material for insulating glass that eliminates the problem of the necessity of long-time curing after production and that has long-term adhesion strength, a high shape retention property, and a high gas-barrier property.

As a result of intensive studies, the present inventors have accomplished the present invention. Namely, the present invention relate to a sealing material for insulating glass that includes a resin composition containing an isobutylene-based diblock copolymer (A) composed of a polymer block (a) containing an aromatic vinyl compound as a constituent monomer and a polymer block (b) containing isobutylene as a constituent monomer.

A preferred embodiment relates to the sealing material for insulating glass wherein the resin composition further contains a thermoplastic resin (B).

A preferred embodiment relates to the sealing material for insulating glass wherein the resin composition further contains a tackifying resin (C).

A preferred embodiment relates to the sealing material for insulating glass wherein the resin composition further contains a plasticizer (D).

A preferred embodiment relates to the sealing material for insulating glass wherein the thermoplastic resin (B) is at least one selected from the group consisting of thermoplastic elastomers, polyethylene, ethylene-α-olefin copolymers, and isobutylene-isoprene copolymers.

A preferred embodiment relates to the sealing material for insulating glass wherein the thermoplastic elastomer is either a styrenic thermoplastic elastomer or a thermoplastic polyurethane elastomer.

A preferred embodiment relates to the sealing material for insulating glass wherein the styrenic thermoplastic elastomer is a triblock copolymer composed of (a polymer block containing an aromatic vinyl compound as a constituent monomer) - (a polymer block containing isobutylene as a constituent monomer) - (a polymer block containing an aromatic vinyl compound as a constituent monomer).

A preferred embodiment relates to the sealing material for insulating glass wherein the styrenic thermoplastic elastomer is a triblock copolymer composed of (a polymer block containing an aromatic vinyl compound as a constituent monomer) - (a polymer block containing a conjugated diene as a constituent monomer) - (a polymer block containing an aromatic vinyl compound as a constituent monomer).

A preferred embodiment relates to the sealing material for insulating glass wherein the styrenic thermoplastic elastomer is a triblock copolymer composed of (a polymer block containing an aromatic vinyl compound as a constituent monomer) - (a polymer block containing a hydrogenated conjugated diene as a constituent monomer) - (a polymer block containing an aromatic vinyl compound as a constituent monomer).

The sealing material for insulating glass composed of the resin composition of the present invention has a satisfactory gas-barrier and hot-melt adhesive properties, and an excellent shape retention property.

### Best Mode for Carrying Out the Invention

A sealing material for insulating glass composed of a resin composition of the present invention is composed of a resin composition that contains an isobutylene-based diblock copolymer (A) composed of a polymer block (a) containing an aromatic vinyl compound as a constituent monoiner and a polymer block (b) containing isobutylene as a constituent monomer and that has hot-melt adhesive property.

The isobutylene-based diblock copolymer (A) used in the present invention is composed of the polymer block (a) and the polymer block (b).

The polymer block (a) is a polymer block containing an aromatic vinyl compound as a constituent monomer. The number-average molecular weight thereof is not particularly limited, but is preferably 30, 000 or less. When the polymer block (a) satisfies the above number-average molecular weight, a material that can be hot-melted (i.e., a material that has low melt viscosity when heated at high temperatures) can be obtained. If the number-average molecular weight is 30,000 or more, the hot-melt applicating is difficult because the material is not easily melted even at high temperatures.

The number-average molecular weight of the polymer block (a) is further preferably 15,000 or less, and more preferably 10,000 or less. The number-average molecular weight of the polymer block (a) is preferably 1, 000 or more and more preferably 2, 000 or more. Since the excessively low number-average molecular weight of the polymer block (a) increases the flowability at about room temperature and causes a cold-flow property, a problem regarding the shape retention property tends to occur.

The calculation method for the number-average molecular weight of the polymer block (a) is different depending on the production (polymerization) method. When the polymer block (a) is synthesized by polymerizing a monomer component containing an aromatic vinyl compound and then polymerizing a monomer component containing isobutylene, the number-average molecular weight of thepolymerblock (a) isrepresentedasthenumber-average molecular weight of the polymer that is prepared after the polymerization of the monomer component containing the aromatic vinyl compound. On the other hand, when the polymer block (a) is synthesized by polymerizing a monomer component containing isobutylene and then polymerizing a monomer component containing an aromatic vinyl compound, the number-average molecular weight of the polymer block (a) is calculated as (the number-average molecular weight of the copolymer, i.e., the final product) - (the number-average molecular weight of the polymer that is prepared after the polymerization of the monomer component containing isobutylene). In addition, when the degree of dispersion of the molecular weight of the copolymer, i.e., the final product, is sufficiently small, the number-average molecular weight of the polymer block (a) may be calculated as (the number-average molecular weight of the copolymer, i.e., the final product) x (the styrene content (weight percent) of the isobutylene-based diblock copolymer (A))/100.

Herein, the number-average molecular weight represents a value that is measured in terms of polystyrene by gel permeation chromatography.

The polymer block (a) is a polymer block containing an aromatic vinyl compound as a constituent monomer. The aromatic vinyl compound is not particularly limited as long as the compound has an aromatic ring and a carbon-carbon double bond that is cationically polymerizable. Examples thereof include styrene, p-methylstyrene, α-methylstyrene, p-chlorostyrene, p-tert-butylstyrene, p-methoxystyrene, p-chloromethylstyrene, p-bromomethylstyrene, silyl-substituted styrene derivatives, and indene. These may be used alone or in combinations of two or more. Among these, at least one selected from the group consisting of styrene, α-methylstyrene, p-methylstyrene, and indene is preferred. In view of the cost, styrene, α-methylstyrene, or a mixture thereof is particularly preferably used.

The polymer block (a) may or may not contain a monomer other than the aromatic vinyl compound. When the polymer block (a) contains a monomer other than the aromatic vinyl compound, the polymer block (a) contains the aromatic vinyl compound in an amount of preferably at least 60 weight percent and more preferably at least 80 weight percent of the total of the polymer block (a). The monomer other than the aromatic vinyl compound in the polymer block (a) is not particularly limited as long as the monomer is cationically polymerizable with the aromatic vinyl compound. Examples of the monomer include isobutylene, aliphatic olefins, dienes, vinyl ethers, and β-pinene. These may be used alone or in combinations of two or more.

The polymer block (b) constituting the isobutylene-based diblock copolymer (A) in the present invention is a polymer block containing isobutylene as a constituent monomer. The number-average molecular weight of the polymer block (b) is not particularly limited, and is preferably such a value that the number-average molecular weight of the whole of the isobutylene-based diblock copolymer (A) is a preferable value.

The polymer block (b) contains isobutylene as a constituent monomer but may or may not contain a monomer other than isobutylene. When the polymer block (b) contains a monomer other than isobutylene, the polymer block (b) contains isobutylene in an amount of preferably at least 60 weight percent and more preferably at least 80 weight percent of the total of the polymer block (b). The monomer other than isobutylene in the polymer block (b) is not particularly limited as long as the monomer is cationically polymerizable with isobutylene. Examples of the monomer include the above aromatic vinyl compounds, aliphatic olefins, dienes, vinyl ethers, and β-pinene. These may be used alone or in combinations of two or more.

In the isobutylene-based diblock copolymer (A), the ratio between the polymer block (a) containing an aromatic vinyl compound as a constituent monomer and the polymer block (b) containing isobutylene as a constituent monomer is not particularly limited. In view of the balance between the gas-barrier property and the hot-melt property, the ratio by weight of polymerblock (a) : polymer block (b) is preferably 5:95 to 40:60 and more preferably 10:90 to 40:60.

The number-average molecular weight of the isobutylene-based diblock copolymer (A) is also not particularly limited. In view of hot-melt adhesive property and processability, the number-average molecular weight of the isobutylene-based diblock copolymer (A) is preferably 3,000 to 200,000 and more preferably 5,000 to 50,000. When the number-average molecular weight of the isobutylene-based diblock copolymer (A) is below the above range, the copolymer exhibits flowability at about room temperature. On the other hand, when the number-average molecular weight of the isobutylene-based diblock copolymer (A) exceeds the above range, the copolymer has a disadvantage in processability.

In order to improve the tackiness and adhesiveness to glass plates, or the like, the isobutylene-based diblock copolymer (A) used in the composition of the present invention may have a functional group in the molecular chain or at an end of the molecular chain. Examples of the functional group include epoxy group, hydroxyl group, amino group, alkylamino groups, ether groups such as alkoxyl groups, carboxyl group, alkoxycarbonyl groups, ester groups such as acyloxyl groups, carbamoyl group, alkylcarbamoyl groups, amido groups such as acylamino groups, acid anhydride groups such as maleic anhydride, silyl group, allyl group, and vinyl group. The isobutylene-based diblock copolymer (A) may have one of these functional groups or may have two or more of these functional groups. Preferred examples of the functional group include epoxy group, amino group, ether groups, ester groups, amido groups, silyl group, allyl group, and vinyl group.

A method for producing the isobutylene-based diblock copolymer (A) is not particularly limited and any known polymerization method can be employed. In order to produce a diblock copolymer having a controlled structure, preferably, the monomer component primarily composed of isobutylene and the monomer component primarily composed of an aromatic vinyl compound are polymerized in the presence of a compound represented by general formula (1) :

R¹R²R³CX (1)

wherein X represents a substituent selected from the group consisting of a halogen atom, alkoxyl group having 1 to 6 carbon atoms, and acyloxyl group having 1 to 6 carbon atoms; each of R¹, R², and R³ represents hydrogen atom, aliphatic hydrocarbon group, or aromatic hydrocarbon group; and R¹, R², and R³ may be the same or different.

Examples of the halogen atom include chlorine, fluorine, bromine, and iodine. Examples of the alkoxyl group having 1 to 6 carbon atoms include, but are not particularly limited to, methoxy group, ethoxy group, n-propoxy group, and isopropoxy group. Examples of the acyloxyl group having 1 to 6 carbon atoms include, but are not particularly limited to, acetyloxy group and propionyloxy group. Examples of the aliphatic hydrocarbon group include, but are not particularly limited to, methyl group, ethyl group, n-propyl group, and isopropyl group. Examples of the aromatic hydrocarbon group include, but are not particularly limited to, phenyl group and methylphenyl group.

The compound represented by general formula (1) serves as an initiator. It is believed that the compound generates a carbocation in the presence of a Lewis acid or the like and becomes the initiation point of cationic polymerization. Examples of the compound represented by general formula (1) used in the present invention include 2-chloro-2-phenylpropane "C₆H₅C(CH₃)₂Cl", 2-methoxy-2-phenylpropane "C₆H₅C(CH₃)₂OCH₃", and 2-chloro-2,4,4-trimethylpropane "(CH₃)₃CCH₂C(CH₃)₂Cl". The Lewis acid catalyst that can coexist may be Lewis acids usable for cationic polymerization. Examples of the Lewis acid that can be suitably used include metal halides such as TiCl₄, TiBr₄, BCl₃, BF₃, BF₃·OEt₂ , SnCl₄ , SbCl₅, SbF₅, WCl₆, TaCl₅, VCl₅, FeCl₃ , ZnBr₂, AlCl₃, and AlBr₃; and organometallichalides suchas Et₂AlCl and EtAlCl₂ . Among these, in view of the catalytic activity and the ease of commercial availability, TiCl₄, BCl₃, and SnCl₄ are preferred.

The amount of the Lewis acid catalyst used is not particularly limited and may be determined in view of, for example, the polymerization property or the polymerization concentration of the monomers used.

In the polymerization reaction, an electron donor component may further coexist according to need. It is believed that the electron donor component has an effect of stabilizing propagating carbocations during cationic polymerization. The addition of the electron donor can provide a polymer that has a small molecular weight distribution and a controlled structure. Examples of the usable electron donor component include, but are not limited to, pyridines, amines, amides, sulfoxides, esters, and metallic compounds each having an oxygen atom bonded to a metal atom.

The polymerization reaction may be conducted in an organic solvent according to need. Any organic solvent maybe used wi thout particular limitations as long as the organic solvent does not essentially inhibit the cationic polymerization. Specific examples thereof include halogenated hydrocarbons such as methyl chloride, dichloromethane, chloroform, ethyl chloride, dichloroethane, n-propyl chloride, n-butyl chloride, and chlorobenzene; alkylbenzenes such as benzene, toluene, xylene, ethylbenzene, propylbenzene, and butylbenzene; straight chain aliphatic hydrocarbons such as ethane, propane, butane, pentane, hexane, heptane, octane, nonane, and decane; branched aliphatic hydrocarbons such as 2-methylpropane, 2-methylbutane, 2,3,3-trimethylpentane, and 2,2,5-trimethylhexane; cyclic aliphatic hydrocarbons such as cyclohexane, methylcyclohexane, and ethylcyclohexane; and paraffin oil prepared by hydrogenation refining of petroleum fractions.

These solvents are used alone or in combination of two or more solvents in consideration of the balance between polymerization properties of the monomers constituting the isobutylene-based diblock copolymer (A), the solubility of the resulting polymer, and the like. The amount of the solvent used is determined such that the concentration of the polymer is 1 to 50 weight percent and preferably 3 to 35 weight percent in consideration of the viscosity of the resulting polymer solution and the ease of heat removal.

When the actual polymerization is conducted, the components are mixed under cooling, for example, at a temperature of -100°C or higher and less than 0°C. In order to balance energy cost and polymerization stability, the particularly preferred temperature range is from -80°C to -30°C.

The polymerization reaction may be conducted by a batch process (a batch process or a semi-batch process) or a continuous process in which each component required for polymerization reaction is continuously added to a polymerization container.

The content of the isobutylene-based diblock copolymer (A) in the resin composition of the present invention is different depending on the components used in combination and cannot be unconditionally specified. However, the content is preferably at least 20 weight percent and more preferably at least 40 weight percent. When the content is below the above value, the gas-barrier property tends to degrade.

The resin composition of the present invention is characterized by including the isobutylene-based diblock copolymer (A), but may include at least one selected from a thermoplastic resin (B), a tackifying resin (C), andaplasticizer (D). Furthermore, an inorganic filler and a desiccant may be incorporated.

The thermoplastic resin (B) is not particularly limited. For example, at least one selected from the group consisting of plastics, rubbers, and thermoplastic elastomers can be used. Examples of the plastics include polyolefins such as polypropylene and polyethylene, polystyrene, ABS, MBS, acrylics, polyurethane, polyvinyl chloride, polyesters, and polyamides. Examples of the rubbers include polyethers, polybutadiene, natural rubber, isobutylene-isoprene copolymers (butyl rubber), chloroprene rubber, and ethylene-propylene rubber.

As the plastics, polyethylene and polyethylene-α-olefin copolymers, which flow at lower temperatures and have high gas-barrier property, are preferred. Examples of the polyethylene-α-olefin copolymers include ethylene-propylene copolymers, ethylene-butene copolymers, ethylene-hexene copolymers, ethylene-octene copolymers, ethylene-vinyl acetate copolymers, and ethylene-ethyl acrylate copolymers.

As the rubbers, isobutylene-isoprene copolymers are preferred in view of gas-barrier property.

Examples of the thermoplastic elastomers (herein, the term "thermoplastic elastomer" eliminates the isobutylene-based diblock copolymer (A) of the present invention) include styrenic thermoplastic elastomers that are block copolymers composed of a polystyrene block and a polybutadiene or polyisoprene block etc., olefin-based thermoplastic elastomers composed of a polyolefin component such as polypropylene and a rubber component such as ethylene-propylene rubber, vinyl chloride-based thermoplastic elastomers composed of crystalline and noncrystalline polyvinyl chlorides, thermoplastic polyurethane elastomers that are block copolymers composed of a polyurethane block and a polyether block etc., polyester-based thermoplastic elastomers that are block copolymers composed of a polyester block and a polyether block etc., and amide-based thermoplastic elastomers that are block copolymers composed of a polyamide block and a polyether block etc.

Among the above thermoplastic elastomers, in view of the softening point and the hot-melt adhesive property, the styrenic thermoplastic elastomers and the thermoplastic polyurethane elastomers are particularly preferred. Furthermore, the styrenic thermoplastic elastomers are preferred in view of high compatibility with the isobutylene-based diblock copolymer (A) of the present invention.

Among the styrenic thermoplastic elastomers, triblock copolymers composed of (a polymer block containing an aromatic vinyl compound as a constituent monomer)-(a polymer block containing a conjugateddiene as a constituent monomer) - (a polymer block containing an aromatic vinyl compound as a constituent monomer), triblock copolymers composed of (a polymer block containing an aromatic vinyl compound as a constituent monomer) - (a polymer block containing a hydrogenated conjugated diene as a constituent monomer)-(a polymer block containing an aromatic vinyl compound as a constituent monomer), and triblock copolymers composed of (a polymer block containing an aromatic vinyl compound as a constituent monomer) - (a polymer block containing isobutylene as a constituent monomer) - (a polymer block containing an aromatic vinyl compound as a constituent monomer) are most preferredbecause these copolymers are easily commercially available.

Examples of the polymer block containing a conjugated diene as a constituent monomer include a polybutadiene block, a polyisoprene block, and blocks consisting of a combination of butadiene and isoprene. Examples of the polymer block containing a hydrogenated conjugated diene as a constituent monomer include polymer blocks of partially hydrogenated conjugated dienes and polymer blocks of wholly hydrogenated conjugated dienes (such as ethylene-butylene copolymer blocks and ethylene-propylene copolymer blocks). Examples of the aromatic vinyl compound include compounds composed of at least one monomer selected from the group consisting of styrene, α-methylstyrene, p-methylstyrene, and indene. In view of the cost, styrene, α-methylstyrene, or a mixture thereof is preferred.

At least one of these thermoplastic resins may be used regardless of the classification of the plastics, the rubbers, and the thermoplastic elastomers. The amount blended is not particularly limited, but is preferably 1 to 100 parts by weight relative to 100 parts by weight of the isobutylene-based diblock copolymer (A).

The tackifying resin (C) is a low molecular weight resin having a number-average molecular weight of 300 to 3,000 and a softening temperature of 60°C to 150°C, the softening temperature being based on a ring and ball method specified in Japanese Industrial Standard (JIS) K-2207. Examples of the tackifying resin include rosin and rosin derivatives, polyterpene resins, aromatic modified terpene resins and hydrides thereof, terpene phenol resins, coumarone-indene resins, aliphatic petroleum resins, alicyclic petroleum resins and hydrides thereof, aromatic petroleum resins and hydrides thereof, aliphatic-aromatic copolymer-based petroleum resins, dicyclopentadiene-based petroleum resins and hydrides thereof, and low molecular weight polymers of styrene or a substituted styrene.

Such a tackifying resin (C) has an effect of improving hot-melt adhesive property. In order to achieve this objective, preferably, a tackifying resin (C) that is compatible with the polymer block containing isobutylene as a constituent monomer in the isobutylene-based diblock copolymer (A) is blended. As such a tackifying resin (C), for example, alicyclic petroleum resins and hydrides thereof, aliphatic petroleum resins, hydrides of aromatic petroleum resins, and polyterpene resins are suitably used.

The amount of the tackifying resin (C) blended is not particularly limited, but is 1 to 300 parts by weight relative to 100 parts by weight of the isobutylene-based diblock copolymer (A). In order to satisfy both gas-barrier property and tackiness, the amount is preferably 1 to 100 parts by weight.

Examples of the plasticizer (D) include mineral oil such as paraffin oil, naphthen oil, and aromatic oil; dialkyl esters such as diethylphthalate,dioctyl phthalate,and dibutyl adipate; and low molecular weight liquid polymers such as liquid polybutene and liquid polyisoprene, and any of these may be used. Such a plasticizer has an effect of improving the flowability during hot-melt processing. In order to achieve this objective and to prevent bleed-out, preferably, a plasticizer that is compatible with the polymer block containing isobutylene as a constituent monomer in the isobutylene-based diblock copolymer (A) is blended. Paraffin oil, liquid polybutene, and the like are suitably used.

The amount of the plasticizer (D) blended is not particularly limited, but is generally 1 to 300 parts by weight and preferably 1 to 100 parts by weight relative to 100 parts by weight of the isobutylene-based diblock copolymer (A).

An inorganic filler may be incorporated in the resin composition of the present invention. The inorganic filler is not particularly limited and any known inorganic filler can be used. For example, at least one selected from the group consisting of calcium carbonate, magnesium carbonate, fused silica, crystalline silica, diatomaceous earth, clay, talc, mica, kaolin, titanium oxide, zinc oxide, carbon black, bentonite, aluminum hydroxide, magnesium hydroxide, barium sulfate, and calcium sulfate can be used.

The inorganic f iller has an effect of improving the rigidity of the sealing material composition of the present invention, thus improving the shape retention property in the operation temperature range. However, since the addition of a large amount of the inorganic filler degrades the flowability during hot-melt processing, the amount blended is preferably 1 to 100 parts by weight relative to 100 parts by weight of the isobutylene-based diblock copolymer (A).

A desiccant may be incorporated in the resin composition of the present invention. Examples of the desiccant include zeolite, silica gel, and alumina, and any of these may be used. Such a desiccant decreases the water vapor permeability of the sealing material composition of the present invention and prevents the air space disposed between glass plates of insulating glass from clouding by humidity. The amount of the desiccant blended is preferably 1 to 50 parts by weight relative to 100 parts by weight of the isobutylene-based diblock copolymer (A).

Furthermore, a hindered phenol-based or hindered amine-based antioxidant, an ultraviolet absorber, a light stabilizer, a pigment, a surfactant, a fire retardant, and the like may be appropriately incorporated in the resin composition of the present invention to such an extent that does not impair physical properties. A known silane coupling agent, an anti-blocking agent, an antistatic agent, a coloring agent, an inorganic or organic antibacterial agent, a lubricant, and the like may also be incorporated.

The method for producing the resin composition of the present invention is not particularly limited, and methods of mechanically mixing with a roller, a Banbury mixer, a kneader, a melting vessel equipped with a mixer, or a single- or twin-screw extruder can be employed. In this step, heating may be performed according to need. A method of feeding compounding agents in an appropriate solvent, stirring the mixture to prepare a homogeneous solution of the composition, and then removing the solvent by distillation can also be employed. Furthermore, according to need, the composition may be molded with an extruder, an injection molding machine, a press machine, or the like.

Having excellent gas-barrier property and hot-melt adhesive property, the resin composition of the present invention can be suitably used as a sealing material. The resin composition of the present invention can be suitably used as a sealing material for glass, in particular, as a sealing material for insulating glass.

The method for applying the resin composition of the present invention as a sealing material for insulating glass is not particularly limited. For example, a molding operation is performed, and successively, a molding article is arranged on the edge of glasses in which two or more glass plates face each other, thus producing an insulating glass. In this case, by using a composition at high temperatures that is supplied from a molding machine, high adhesiveness (hot-melt adhesive property) to the glass plates canbe achieved. Also, the composition maybe applied to a material for insulating glass while the decrease in the temperature of the composition is suppressed using an apparatus such as an applicator. An apparatus that can be heated is preferred for the above apparatus.

The glass plates used in insulating glass including the resin composition of the present invention as a sealing material are not particularly limited. Examples thereof include glass plates of windows and doors etc. that are generally and widely usedinbuildingmaterials, vehicles, and the like; temperedglass; laminated glass; glass with a metal mesh; heat-absorbing glass; glass plates in which a thin film composed of a metal or other inorganic substance is coated on the inner surface, such as heat reflective glass and low reflectivity glass; and acrylic resin plates and polycarbonate plates, which are called organic glass. Insulating glass may include two glass plates or three or more glass plates.

According to need, an adhesive or a primer that is dissolved in a solvent may be applied on the glass surface being in contact with the resin composition of the present invention, and is dried in air. The resin composition is then melted at a temperature of, for example, 100°C to 200°C with a general extruder having a cylinder with an appropriate diameter, and is extruded from a die with an appropriate shape of the leading end. Thus, the resin' composition is interposed between two glass plates and is cooled to form insulating glass.

This method for producing insulating glass is an example and the method for producing insulating glass including a sealing material for insulating glass composed of the resin composition of the present invention is not limited to the above method. For example, a spacer having a desired shape may be molded using the resin composition in advance. The spacer may be bonded, for example, to two glass plates by thermocompression, thereby producing insulating glass.

### (EXAMPLES)

The present invention will now be described in more detail on the basis of examples, but the present invention is not limited by these examples at all.

### (Production Example 1) [Production of styrene-isobutylene-diblock copolymer (SIB)]

To a 2-L reactor equipped with a stirrer, 589 mL of methylcyclohexane (dehydrated over molecular sieves), 613 mL of n-butyl chloride (dehydrated over molecular sieves), and 0.550 g of cumyl chloride were added. After the reactor was cooled to -70°C, 0.35 mL of α-picoline (2-methylpyridine) and 179 mL of isobutylene were added. Furthermore, 9.4 mL of titanium tetrachloride was added to start polymerization. The reaction was performed for 2.0 hours while the solution was stirred at -70°C. Subsequently, 59 mL of styrene was added to the reaction solution and the reaction was further continued for 60 minutes. Subsequently, a large amount of methanol was added to stop the reaction. After the solvent and the like were removed from the reaction solution, the polymer was dissolved in toluene and was then washed twice with water. The toluene solution was added to a methanol mixture to precipitate the polymer. The resulting polymer was dried under vacuum at 60°C for 24 hours, thereby producing an isobutylene-based block copolymer.

The resulting isobutylene-based block copolymer had a number-average molecular weight of 48, 000 and a molecular weight distribution of 1.12. The number-average molecular weight was measured with a GPC system 510 manufactured by Waters Corporation (chloroform was used as the solvent and the flow rate was 1 mL/min) and values represented by polystyrene equivalent were described.

### (Production Example 2) [Production of styrene-isobutylene-styrene triblock copolymer (SIBS)]

A 2-L separable flask, i.e., a polymerization reactor, was purged with nitrogen, and 456.1 mL of n-hexane (dehydrated over molecular sieves) and 656.5 mL of butyl chloride (dehydrated over molecular sieves) were then added with an injection syringe. The polymerization reactor was cooled by immersing in a dry ice-methanol bath at -70°C. A feed tube composed of Teflon (registered trademark) was then connected to a pressure-resistant glass liquefaction tube equipped with a three-waycock containing 232 mL (2,871 mmol) of isobutylene monomer and the isobutylene monomer was fed to the polymerization reactor with a nitrogen pressure. Subsequently, 0.647 g (2.8 mmol) of p-dicumyl chloride and 1.22 g (14 mmol) of N,N-dimethylacetamide were added. Subsequently, 8.67 mL (79.1 mmol) of titanium tetrachloride was further added to start polymerization. Stirring was performed at the same temperature for 1.5 hours from the initiation of polymerization, and about 1 mL of the polymerization solution was then sampled from the polymerization solution. Subsequently, a mixed solution of 77.9 g (748 mmol) of styrene monomer, 23.9 mL of n-hexane, and 34.3 mL of butyl chloride, which was cooled to -70°C in advance, was added in the polymerization reactor. Forty five minutes later from the addition of the mixed solution, about 40 mL of methanol was added to stop the reaction.

After the solvents and the like were removed by distillation from the reaction solution, the polymer was dissolved in toluene and was then washed twice with water. The toluene solution was added to a large amount of methanol to precipitate the polymer. The resulting polymer was dried under vacuum at 60°C for 24 hours, thereby producing the target block copolymer. The molecular weights of the resultingpolymers were measured with gel permeation chromatography (GPC). In the resulting block copolymer, the isobutylene polymer obtained before the addition of styrene had an Mn of 50 , 000 and an Mw/Mn of 1.40 and the block copolymer obtained after styrene polymerization had an Mn of 67,000 and an Mw/Mn of 1.50.

### (Examples 1 to 3 and Comparative Examples 1 and 2)

The composition was compounded in the ratios shown in Table 1 so that each of the total weights was 40 g. The components were melt-kneaded with a Labo Plastomill (manufactured by Toyo Seiki Seisaku-Sho Ltd.) set at 170°C for 15 minutes to produce resin compositions used as sealing materials.

### [Production of test piece for water vapor permeability]

Each of the resulting resin compositions was pressed under heating at 100°C to 170°C to produce sheets with a thickness of 1 mm.

### [Production of test piece for adhesive property to glass and shape retention property]

Each of the resulting resin compositions was pressed under heating at 100°C to 170°C to form test pieces with dimensions of 10 mm in width x 50 mm in length x 12 mm in thickness. Each of the test pieces was sandwiched between two glass plates each having dimensions of 50 mm in width x 50 mm in length x 5 mm in thickness and was then aged in an oven at 100°C to 170°C for 10 minutes. Thus, test pieces were produced.

### [Evaluation methods]

### (Water vapor permeability)

The water vapor permeability was measured at 40°C and 90% RH according to Japanese Industrial Standard (JIS) Z 0208 . Table 1 shows the results.

### (Test of tackiness to glass)

The test piece was left to stand under a temperature condition of 25°C for 15 minutes while the gap between the two glass plates was deformed by elongating by 10% relative to the initial state (after production). The degree of tackiness and adhesion at the interface between the glass and the material was observed. When the adhesion area was not changed as compared with that before the deformation (initial state), the test piece was evaluated as "Good". When the separation was observed, the test piece was evaluated as "Not good". Table 1 shows the results.

### (Shape retention property test)

One of the glass plates was fixed and a load of 3 kg was applied on the other glass plate for 15 minutes. The amount of the downward shift of the glass plate on which the load was applied was measured under a temperature condition of 25°C. When the amount of the shift was 0.5 mm or less, the test piece was evaluated as "Good". When the amount of the shift was 0.5 mm or more, the test piece was evaluated as "Not good". Table 1 shows the results.

The abbreviations of the materials used in the examples and the comparative examples and the specific descriptions thereof are as follows.

### [Content of the components described in the examples and the like] SIB: styrene-isobutylene-diblock copolymer (Production Example 1)

SIBS: styrene-isobutylene-styrene triblock copolymer

### (Production Example 2)

IIR: butyl rubber (Butyl 065, manufactured by JSR Corporation) SEPS: styrene-ethylene propylene-styrene triblock copolymer

### (SEPTON 2007, manufactured by Kuraray Co., Ltd.)

EOC: ethylene-octene copolymer (ENGAGE 8150, manufactured by The Dow Chemical Company)

Tackifying resin: (Arkon P-100, manufactured by Arakawa Chemical Industries, Ltd.)

Plasticizer: paraffin oil (PW-380, manufactured by Idemitsu Kosan Co., Ltd.)

Silane coupling agent: (A-171, manufactured by Nippon Unicar Co. , Ltd.)

### Table 1

The sealing materials composed of the resin compositions each containing the isobutylene-based diblock copolymer of the present invention, i.e., Examples 1 to 3, showed satisfactory values of water vapor permeability of 3.0 to 4.5 and had excellent adhesive property shape retention property. In contrast, Comparative Example 1, i.e., a composition that did not contain the isobutylene-based diblock copolymer of the present invention and that was composed of SIBS, showed satisfactory water vapor permeability, but had low adhesive property, resulting in the separation easily. In addition, Comparative Example 2, i.e., a composition composed of a butyl rubber, was easily deformed and could not satisfactorily fulfill the role as a spacer. Industrial Applicability

Having hot-melt adhesive property, the resin composition of the present invention can be used for various applications as an alternative to conventional hot-melt products. The resin composition of the present invention is formed into sheets, moldings, pressure-sensitive adhesive articles, and foamed articles, and can be used as a pressure-sensitive adhesive material, an adhesive material, a gasket material, a sealing material, a base material for pressure-sensitive adhesives, a molding material, a rubber material, and the like. More specifically, examples thereof include sealing materials for architecture and vehicles, a sealing material for glass, a water-stop sealing material for automobiles, a water-stop tape for architecture, an electrical insulating tape, and various types of packing. Among these, the resin composition of the present invention can be preferably used as various sealing materials requiring gas-barrier property. The resin composition of the present invention can be preferably used as a sealing material for glass, in particular, as a sealing material for insulating glass.

Examples of the effective application of the sealing material having hot-melt property of the present invention for insulating glass seal include an application in which the sealing material of the present invention is disposed between at least two glass plates as a spacer also serving as a sealing material and sealing is performed with the sealing material of the present invention alone, an application of combining the sealing material of the present invention with a metal or resin spacer containing a desiccant, an application of combining the sealing material of the present invention with a metal or resin spacer not containing any desiccant , and an application in which the sealing material of the present invention is used as a spacer also serving as a primary sealing material and a secondary sealing material is combined. In any of these methods, by using the sealing material having hot-melt property of the present invention, excellent tackiness and shape retention property can be achieved and insulating glass can be easily produced.

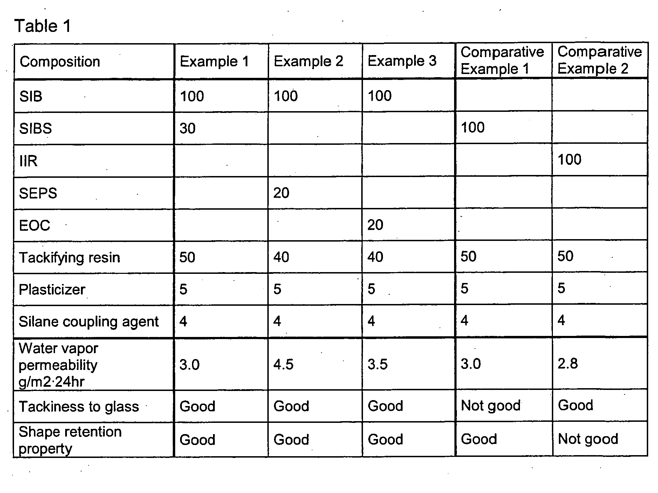

## Claims

1. A sealing material for insulating glass, comprising a resin composition including an isobutylene-based diblock copolymer (A) composed of a polymer block (a) containing an aromatic vinyl compound as a constituent monomer and a polymer block (b) containing isobutylene as a constituent monomer.

2. The sealing material for insulating glass according to claim 1, wherein the resin composition further comprises a thermoplastic resin (B).

3. The sealing material for insulating glass according to claim 1 or 2, wherein the resin composition further comprises a tackifying resin (C).

4. The sealing material for insulating glass according to any one of claims 1 to 3, wherein the resin composition further comprises a plasticizer (D).

5. The sealing material for insulating glass according to any one of claims 2 to 4, wherein the thermoplastic resin (B) is at least one selected from the group consisting of thermoplastic elastomers, polyethylene, ethylene-α-olefin copolymers, and isobutylene-isoprene copolymers.

6. The sealing material for insulating glass according to claim 5, wherein the thermoplastic elastomer is either a styrenic thermoplastic elastomer or a thermoplastic polyurethane elastomer.

7. The sealing material for insulating glass according to claim 6, wherein the styrenic thermoplastic elastomer is a triblock copolymer composed of (a polymer block containing an aromatic vinyl compound as a constituent monomer)-(a polymer block containing isobutylene as a constituent monomer) - (a polymer block containing an aromatic vinyl compound as a constituent monomer) .

8. The sealing material for insulating glass according to claim 6, wherein the styrenic thermoplastic elastomer is a triblock copolymer composed of (a polymer block containing an aromatic vinyl compound as a constituent monomer)-(a polymer block containing a conjugated diene as a constituent monomer) - (a polymer block containing an aromatic vinyl compound as a constituent monomer).

9. The sealing material for insulating glass according to claim 6, wherein the styrenic thermoplastic elastomer is a triblock copolymer composed of (a polymer block containing an aromatic vinyl compound as a constituent monomer)-(a polymer block containing a hydrogenated conjugated diene as a constituent monomer) - (a polymer block containing an aromatic vinyl compound as a constituent monomer).
